# EUROPEAN PATENT APPLICATION

(11) **EP 2 988 108 A1**
(43) Date of publication of application: **24.02.2016**
(21) Application number: 13882080.8
(22) Date of filing: 25.04.2013
(51) Int. Cl.: G01M 17/02, G01L 5/00, B60C 19/00

(54) **MODULE FOR SENSING ACTIVE CONTACT PRESSURE OF TIRE, AND TIRE TESTING APPARATUS USING SAME**

(30) Priority: 17.04.2013 KR 20130042236
(71) Applicant: Jang, Cheol Hwan, Daejeon 305-792 (KR)
(72) Inventor: Jang, Cheol Hwan, Daejeon 305-792 (KR)
(74) Representative: Spengler, Robert
(86) International application number: PCT/KR2013/003590
(87) International publication number: WO 2014/171573

(57) **Abstract**

The present invention relates to a device for testing static characteristics and a dynamic contact pressure of a tire and, more specifically, to a module for sensing a dynamic contact pressure of a tire, which is installed on a road surface, measures a tire contact pressure and a deformation amount generated between a tire and the road surface in the course of actually driving a vehicle, to predict and analyze wearing performance of the tire, control stability (cornering), braking performance, rotation resistance, and the like, and includes a plurality of cameras capable of close-up imaging to make a distance between a contact plate and a camera narrow to lower an overall height, thereby simplifying a configuration and easily moving, and a tire testing apparatus using the same.

## Description

### [Technical Field]

The present invention relates to a module for sensing a dynamic contact pressure of a tire and a tire testing apparatus using the same and, more specifically, to a module for sensing a dynamic contact pressure of a tire which tests a dynamic contact pressure to measure a dynamic contact pressure of tires of a driving vehicle, and a tire testing apparatus using the same.

Particularly, the present invention relates to a module for sensing a dynamic contact pressure of a tire which is installed on a road surface, measures a tire contact pressure and a deformation amount generated between a tire and the road surface in the course of actually driving a vehicle, to predict and analyze wearing performance of the tire, control stability (cornering), braking performance, rotation resistance, and the like, and includes a plurality of cameras capable of close-up imaging to make a distance between a contact plate and a camera narrow to lower an overall height, thereby simplifying a configuration and easily moving, and a tire testing apparatus using the same.

### [Background Art]

Generally, a tire plays an important role in driving a vehicle. In performance of such a tire, wearing performance is varied with a contact shape and contact pressure distribution, control stability performance, braking performance, driving performance, fuel efficiency, and the like are determined depending thereon, and thus the contact pressure distribution of a tire is a standard factor determining a shape and characteristics of a tire.

Accordingly, various methods capable of ideally measuring contact pressure distribution of a tire have been studied, and one of devices which measure such contact pressure distribution of a tire is disclosed in Korean Registered Patent Publication No. 10-0240800.

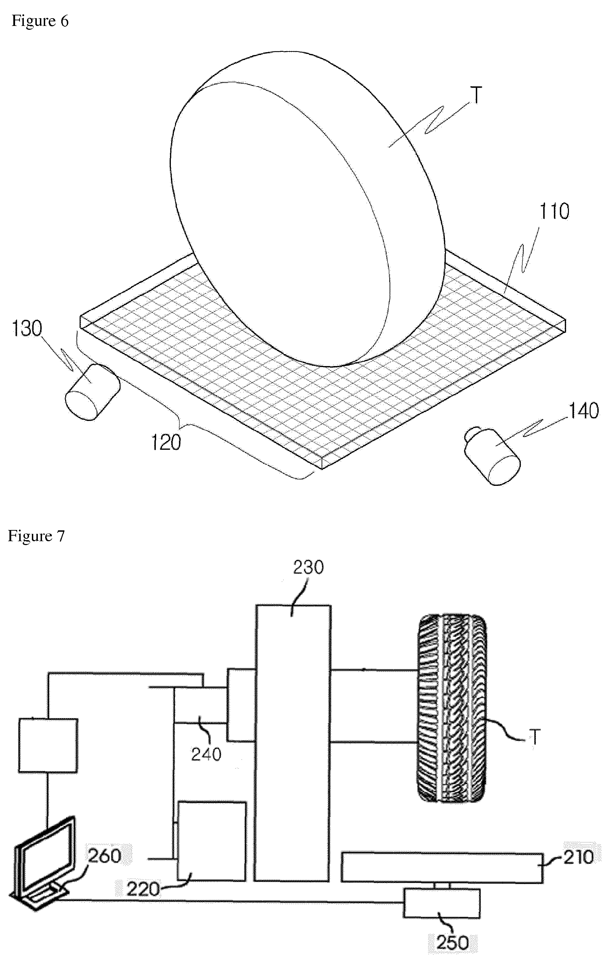

As illustrated in Figure 6, a tire contact pressure distribution measuring device includes: a transparent elastic medium plate 110 which is installed on a driving road surface of a tire; a moire grid 120 which is installed to have a predetermined angle with respect to a driving direction of the tire; a light source unit 130 which is provided at a lower portion of the moire grid 120 to generate light passing through the moire grid and the elastic medium plate and then being irradiated to a contact portion between the tire T and the elastic medium plate 110; and a light receiving unit 140 which is provided at the lower portion of the moire grid to receive light reflected from the contact portion.

In the conventional tire contact pressure measuring device with such a configuration, the elastic medium plate and the moire grid are configured to be separated from each other, installation thereof is inconvenient, and there is a problem that the moire grid does not sufficiently reflect deformation of the elastic medium plate. In addition, such a conventional tire contact pressure measuring device has a problem that the elastic medium plate is configured to be flat, indirect friction between the elastic medium plate and the tire is measured, and tire contact pressure distribution may be measured to be different from the actual tire contact pressure distribution according to a state of the elastic medium plate.

In other words, such a conventional tire contact pressure measuring device can simply measure only compressive deformation of a tire caused by load applied to the tire in a proper condition, cannot measure a dynamic contact pressure at the time of friction of the tire with the road surface while the tire is rotated at a high speed, and has a problem that a deformation amount occurring at the contact portion cannot be measured.

In addition, a tire friction performance measuring device is disclosed in Korean Registered Utility Model Publication No. 20-0370816. As illustrated in Figure 7, the device includes: an asphalt surface, a test plate 210 which has the above asphalt surface on which ice or snow is loaded at a predetermined height; a motor 220 which rotates a tire connected to one end of a shaft on the test plate; a main frame 230 which supports the motor and the shaft; a torque meter 240 which is connected to the shaft and measures torque applied to the tire and the number of rotations; a load cell 250 which is integrally connected to a lower face of the test plate and measures load; and a computer 260 which receives result values measured in the torque meter and the load cell through a PLC substrate.

The conventional tire friction performance measuring device configured with described above measures friction performance of a tire in a state where actual shaft load of a vehicle is not applied to the tire, and friction performance of a tire mounted on an actually driven vehicle cannot be measured. In other words, in the case of a tire installed on a vehicle driven on a road, shaft load of a vehicle is moved forward, backward, left, and right in tires according to braking and acceleration, there are different contact pressures and friction characteristics, but such a convention tire friction performance measuring device measures friction performance of a tire rotating in a fixed frame, and thus there is a disadvantage that further substantial friction performance cannot be measured.

In addition, in the case of the load cell constituting the tire friction performance measuring device, only load of the plate is detected, and thus there is a disadvantage that displacement according to a situation of a vehicle cannot be detected as described above.

A technique invented by the present applicant to solve such disadvantages is disclosed in Korean Registered Patent Publication No. 10-1164423. As illustrated in Figure 8, a dynamic contact pressure measuring device includes: a transparent contact plate 320 which is installed at an inlet of a manhole 310 formed on a road and has fine unevenness formed on an outer face; a 3-axis road cell 330 which is installed on a lower face of the contact plate and measures force acting in each direction of x, y, and z axes generated on a tire by weight and movement of a vehicle; imaging means 340 which takes an image of a contact face of a tire coming in contact with the contact plate; a lighting device 350 which irradiates the transparent contact plate having the unevenness with light to generate shadow on a surface of the compressed tire and takes a clear image of a compression degree; and a computer 360 which has a program of calculating a contact pressure, a dynamic contact shape, and a deformation amount of a tire from signals detected by the 3-axis load cell and the imaging means.

In such a conventional dynamic contact pressure measuring device, all constituent elements are installed in the manhole, it is necessary to excavate the manhole when configuring a device, a lot of time and manpower are required to install the device, water from snow or rain enters into the manhole in case of to cause breakdown of the device.

In other words, there is a disadvantage that the device cannot be installed at variously deformed positions.

In addition, as illustrated, the conventional dynamic contact pressure measuring device takes an image of contact deformation of a tire using one camera, the camera has to be sufficiently separated from the contact plate to take a clear image of a deformed shape of the tire by the camera, thus the depth of an excavated manhole became deep, making the work difficult.

### [Summary of Invention]

### [Technical Problem]

The invention has been made to solve the problems of the related art described above, and an object of the invention is to provide a module for sensing a dynamic contact pressure of a tire and a tire testing apparatus using the same, in which installation places and disposition positions are varied to present various road situations, thereby performing various tests according to road situations.

Particularly, another object of the invention is to provide a module for sensing a dynamic contact pressure of a tire and a tire testing apparatus using the same, capable of adjusting a rotation speed and a steering direction of a tire, composing environment of winter season and rainy season, and improving a tire suitable for environment by testing a contact pressure between a tire and a ground in case of rain and heavy snow as well as normal environment.

In addition, still another object of the invention is to provide a module for sensing a dynamic contact pressure of a tire and a tire testing apparatus using the same, which include a plurality of cameras capable of close-up imaging to make a distance between a contact plate and a camera narrow to lower an overall height, thereby simplifying a configuration and easily moving.

### [Solution to Problem]

In order to achieve such objects, according to an aspect of the invention, there is provided a module for sensing a dynamic contact pressure of a tire including: a transparent contact plate which comes in contact with a tire; a 3-axis road cell which is installed on a lower face of the contact plate and measures force acting in each direction of x, y, and z axes generated on the tire; a camera module which takes an image of a contact face of the tire coming in contact with the contact plate; a support plate to which the camera module and the 3-axis load cell are fixed and supported; and a computer which includes a program of calculating a dynamic contact pressure, a contact shape, and a deformation amount from signals detected by the camera module and the 3-axis load cell, and an image correction program.

In addition, in the module for sensing a dynamic contact pressure of a tire, unevenness may be formed on an upper face of the transparent contact plate to detect a friction state with the tire, and a communication module for transmitting the signals detected by the 3-axis load cell and the camera module to the computer may be further provided.

In addition, in the module for sensing a dynamic contact pressure of a tire, the support plate may further include a lighting device which irradiates a surface of the tire coming in contact with the ground to generate shadow, and the camera module may be formed by vertically and horizontally arranging a plurality of cameras, wherein the lighting device may be installed on each camera.

According to another aspect of the invention, there is provided a vehicle tire testing apparatus using the module for sensing a dynamic contact pressure of a tire configured as described above, wherein at least one sensing module M is installed along a movement path on which a vehicle moves, a vehicle detecting sensor for detecting a vehicle is further provided at a portion to which the vehicle enters, and signals detected by the 3-axis and the camera module of each sensing module are transmitted to the computer through a communication module.

The vehicle tire testing apparatus using such a sensing module can be installed only by putting and fixing the sensing module on and to the ground surface on which a vehicle movement path is formed, and may be provided with inclination plates for a vehicle to easily put on the sensing module, at front and rear ends of each sensing module.

### [Advantageous Effects of Invention]

According to the invention, means for sensing a tire dynamic contact pressure is modularized into one, an installation place and a disposition position can be varied, and thus there is an advantage that it is possible to perform various tests suitable for road situations by presenting various road situations.

In addition, according to the invention, the device can be installed without excavating an installation place, and thus there is an advantage that it is possible to install the device more easily.

In addition, there is no restriction in an installation place, various types of curved road situations are presented, and there is an advantage that it is possible to sense a tire dynamic contact pressure at the time of hastily changing a lane and turning.

Furthermore, according to the invention, a plurality of cameras capable of close-up imaging are arranged, a signal detected by each camera is adjusted to detect deformation of a tire, a distance between the camera and a contact plate becomes narrow, an overall size is reduced, and it is possible to provide a module for sensing a dynamic contact pressure of a tire with easy carrying and moving.

### [Brief Description of Drawings]

[Figure 1] Figure 1 is a diagram illustrating a configuration of a module for sensing a dynamic contact pressure of a tire according to the invention.
[Figure 2] Figure 2 is an exploded perspective view illustrating the module for sensing a dynamic contact pressure of a tire according to the invention.
[Figure 3] Figure 3 is a perspective view illustrating an example of a camera constituting the module for sensing a dynamic contact pressure of a tire according to the invention.
[Figure 4] Figure 4 is a side cross-sectional view illustrating that the module for sensing a dynamic contact pressure of a tire according to the invention is installed.
[Figure 5] Figure 5 is a plan view illustrating a vehicle testing road configured using the module for sensing a dynamic contact pressure of a tire according to the invention.

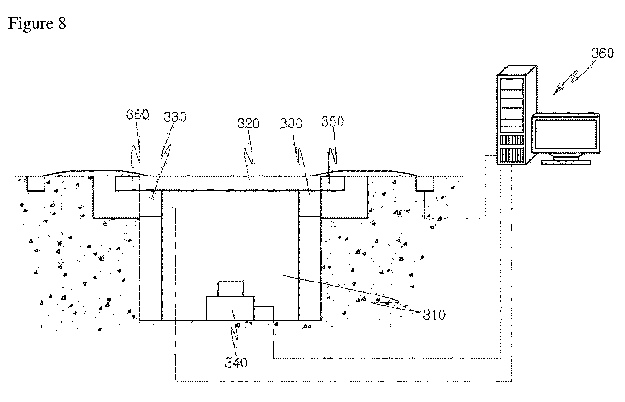

[Figures 6 to 8] Figures 6 to 8 are diagrams illustrating configurations of various examples of a conventional tire testing apparatus.

### [Description of Embodiments]

Hereinafter, preferred embodiments which can be easily embodied by those skilled in the art will be described with reference to the accompanying drawings. In the drawings of the invention, sizes and dimensions of structures are illustrated by enlarging or reducing as compared with the actual sizes and dimensions to clarify the invention, the known configurations are not illustrated to exhibit characteristic configurations, and the invention is not limited to the drawings. In describing phenomenon of the preferred embodiments of the invention in detail, when it is determined that detailed description of the related known functions or configurations may unnecessarily blur the gist of the invention, the detailed description is omitted.

A module for sensing a dynamic contact pressure of a tire according to the invention is simple and is easily installed, and includes a camera module 300 installed to be adjacent to a transparent contact plate 100 coming in contact with a tire.

As described above, the transparent contact plate 100 is means for deforming a contact face of a tire pressed in contact with the tire T, and transferring a contact pressure of such a tire to the following 3-axis load cell 200. In order to sense a deformation state of the tire T pressed to the transparent contact plate 100, the camera module 300 is provided under the transparent contact plate 100, and the transparent contact plate 100 is made of a transparent material for the camera module 300 to take an image of the deformation state of the tire pressed to the upper portion of the transparent contact plate 100.

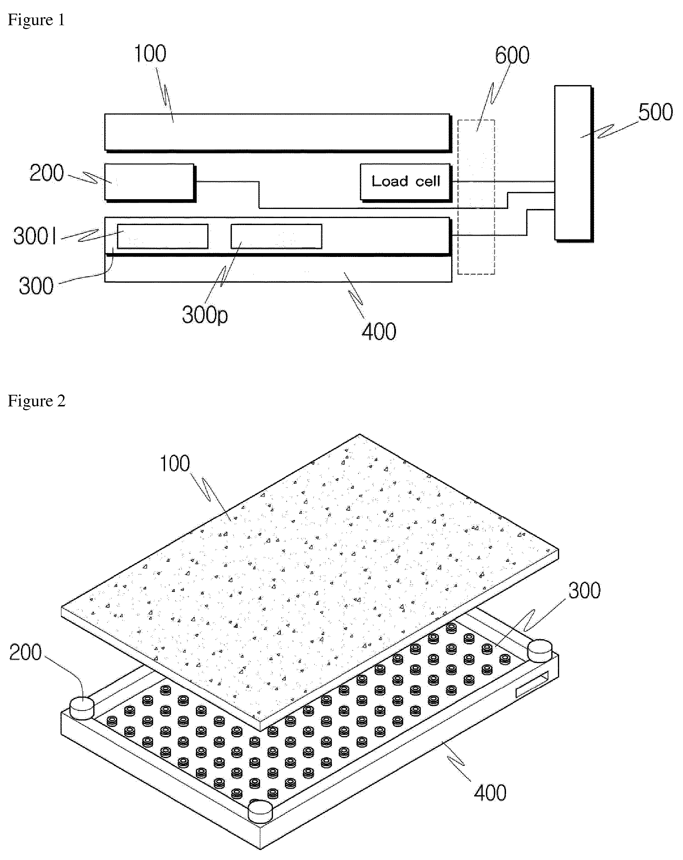

As illustrated in Figure 1, the transparent contact plate 100 has lower edges supported by four corners of a support plate 400, and has a 3-axis load cell 200 between the transparent contact plate 100 and support means.

The 3-axis road cell 200 plays a role of force acting in each direction of x, y, and z axes generated by the tire pressing the transparent contact plate 100. The 3-axis road cell 200 senses change in force (transverse force and forward and backward force) in the x and y directions based on friction between the tire and the transparent contact plate 100 as well as force (x-axis direction force) pressing the tire toward the contact plate.

In other words, the 3-axis road cell 200 senses change in force based on pushing of the contact plate caused by friction and load of the vehicle when the transparent contact plate 100 is pushed backward by rotation force of the tire as well as force pressing the transparent contact plate 100 by the tire when the tire is allowed to come in close contact with the transparent contact plate 100. In addition, when the tire is inclined, deformation may be generated left and right as well as forward and backward (advancing direction of a vehicle) in the transparent contact plate 100, and change in force caused by such deformation is sensed by the 3-axis load cell 200. The displacement sensed by the 3-axis load cell 200 is transmitted to the computer 500, and a tire contact pressure is calculated on the basis thereof. Only one 3-axis load cell 200 may be installed, but preferably, four 3-axis load cells may be installed on four corners of the lower face of the transparent contact plate 100, respectively, such that the transparent contact plate 100 is supported by the 3-axis load cells.

As described above, the transparent contact plate 100 is pressed by the tire, and is subjected to force of being pushed by driving the tire; there is a gap between the support plate 400 and the transparent contact plate 100 such that the transparent contact plate 100 pushed by the tire can be smoothly moved, and the 3-axis load cell 200 is formed by coupling the support plate 400 in a state where the transparent contact plate 100 is separated from the support plate 400.

In addition, it is preferable that unevenness is formed on the upper face of the transparent contact plate 100 such that the same friction force as the case of the tire driven on the actual road is allowed to act.

The camera module 300 takes an image of the tire deformed by contact with the transparent contact plate 100 as described above, and transmits the image to the computer 500.

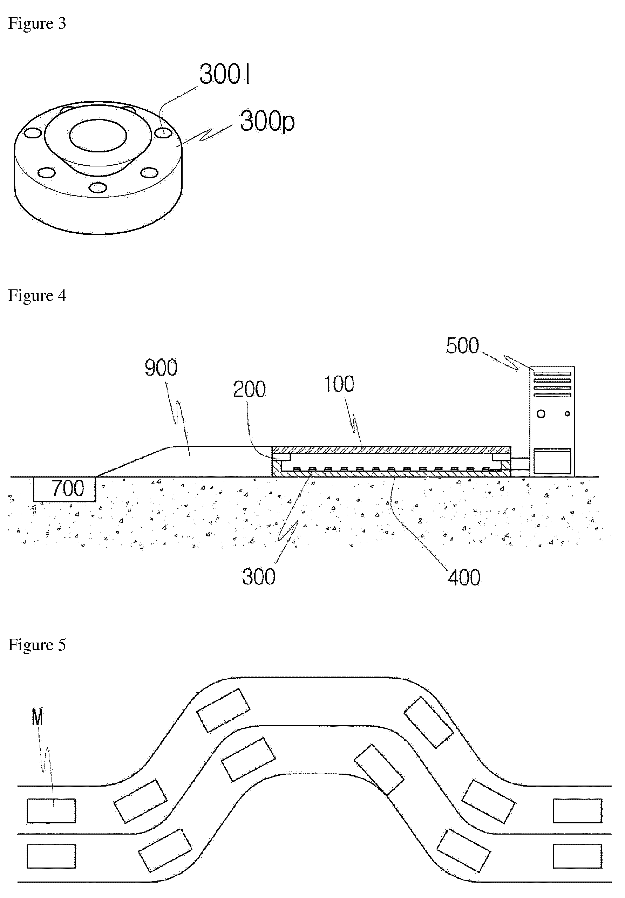

As illustrated in Figure 3, the camera module 300 is configured by vertically and horizontally arranging a plurality of cameras 300p integrally provided with at least one lighting device 3001 as illustrated in Figure 1 and Figure 2, using small-size cameras, and it is possible to sense deformation of the tire even when it is installed to be adjacent to the transparent contact plate 100 and a distance between the transparent contact plate 100 and the support plate 400 is narrow. In other words, the camera 300p is a camera capable of close-up imaging, and a camera having a relatively low resolution may be used.

The image obtained by close-up imaging by such a camera 300p may be deformed about the center, and thus the image is corrected through an image correction module provided in the computer to obtain a normal image. Such an image correction module may be configured by software, and may be configured by employing image correcting software provided already, and thus detailed description thereof will be omitted.

The computer 500 is means for calculating a dynamic contact pressure, a contact shape, and a deformation amount of a tire from the signals sensed by the 3-axis load cell 200 and the camera module 300, and a program for calculating the contact pressure compares the displacement of the transparent contact plate 100 sensed by the 3-axis load cell 200 with the deformation degree of the tire sensed by the camera module 300, and can calculate the contact pressure of the tire according to states of the vehicle, that is, situations such as when the vehicle is driven at a constant speed, when accelerating, when braking, and when turning a direction. In the invention, the object is to sense the deformation state of the tire required in the calculation program and the displacement of the contact plate according to situation of the vehicle, such a calculation program may be operated using a rule established through a test, and thus detailed description thereof is omitted.

In addition, the invention relates to an apparatus which is installed on an actual road and can test a tire while driving a vehicle, it is preferable to further install a communication module 600 as means for transmitting signals sensed by the 3-axis load cell 200 and the camera module 300 to the computer 500 in a remote location, and it is preferable that the communication module 600 is configured by wireless rather than by wires.

The tire testing apparatus using the module for sensing a dynamic contact pressure of a tire configured as described above is installed on a movement path on which a vehicle is actually driven as illustrated in Figure 5, and a plurality of modules M may be installed along the movement path except for the computer 500.

In other words, as illustrated in Figure 5, the modules M may be installed only at locations where the tire test is necessary such as a straight road, a right-turn road, and a left-turn road, without installing the modules M on the whole of the movement path through the vehicle moves, signals sensed by the 3-axis road cell 200 and the camera module 300 of each module M are transmitted to the computer 500 in a remote location through the communication module 600, information is collected, and the collected information is compared and analyzed, to predict and analyze wearing performance, control stability (cornering), braking performance, rotation resistance, and the like of the tire.

It is preferable to install vehicle sensors 700 for sensing a vehicle at front and rear portions of the sensing module M, that is, at portions where a vehicle goes in and out, to inform the tire testing apparatus of the invention that a vehicle enters into the tire testing apparatus of the invention, to prepare a test in advance.

As the vehicle sensor 700, the same or similar sensor as or to a sensor which is installed on a road to sense passing of a vehicle may be used, and detailed description thereof is omitted.

The tire testing apparatus using the module for sensing a dynamic contact pressure of a tire configured as described above can be easily installed only by fixing the sensing module M onto the ground surface in a place where a vehicle movement path is formed and installing the inclination plates 900 at the front and rear ends of each sensing module such that a vehicle easily gets on the sensing module, thereby achieving easy installation.

In other words, the module M can be installed without performing excavation as conventional, the module can be easily removed after installation, and thus a tire test can be performed even on a road on which an actual vehicle is driven.

## Claims

1. A module for sensing a dynamic contact pressure of a tire, which performs a test suitable for a road situation by changing an installation place or a disposition position, the module comprising:
a transparent contact plate which comes in contact with a tire;
a 3-axis road cell which is installed on a lower face of the contact plate and measures force acting in each direction of x, y, and z axes generated on the tire;
a camera module which takes an image of a contact face of the tire coming in contact with the contact plate;
a support plate to which the camera module and the 3-axis load cell are fixed and supported; and
a computer which includes a program of calculating a dynamic contact pressure, a contact shape, and a deformation amount from signals detected by the camera module and the 3-axis load cell, and an image correction program.

2. The module for sensing a dynamic contact pressure of a tire according to Claim 1, wherein unevenness is formed on an upper face of the transparent contact plate.

3. The module for sensing a dynamic contact pressure of a tire according to Claim 1, further comprising a communication module for transmitting the signals detected by the 3-axis load cell and the camera module to the computer.

4. The module for sensing a dynamic contact pressure of a tire according to Claim 1, wherein the support plate is provided with a lighting device which irradiates a surface of the tire coming in contact with the ground to generate shadow.

5. The module for sensing a dynamic contact pressure of a tire according to Claim 1, wherein the camera module is formed by vertically and horizontally arranging a plurality of cameras.

6. The module for sensing a dynamic contact pressure of a tire according to Claim 1, wherein each camera constituting the camera module is provided with a lighting device .

7. A vehicle tire testing apparatus using the module for sensing a dynamic contact pressure of a tire according to any one of Claim 1,
wherein at least one sensing module is installed along a movement path on which a vehicle moves, a vehicle detecting sensor for detecting a vehicle is further provided at a portion to which the vehicle enters, and signals detected by the 3-axis and the camera module of each sensing module are transmitted to the computer through a communication module.

8. The tire testing apparatus using a module for sensing a dynamic contact pressure of a tire according to Claim 7, wherein the sensing module is fixed onto the ground surface on which a vehicle movement path is formed, and is provided with inclination plates for a vehicle to easily put on the sensing module, at front and rear ends of each sensing module.
